# EUROPEAN PATENT APPLICATION

(11) **EP 2 767 332 A1**
(43) Date of publication of application: **20.08.2014**
(21) Application number: 13000764.4
(22) Date of filing: 14.02.2013
(51) Int. Cl.: B01J 2/04

(54) **Process and device for particle synthesis on a superamphiphobic or superoleophobic surface**

(71) Applicant: Max-Planck-Gesellschaft zur Förderung der Wissenschaften e.V., 80539 München (DE)
(72) Inventor: Butt, Hans-Jürgen, 57223 Kreuztal (DE); Vollmer, Doris, 55118 Mainz (DE); Deng, Xu, 55131 Mainz (DE); Klapper, Markus, 55128 Mainz (DE); Paven, Maxime, 55288 Udenheim (DE); Schuster, Thomas, 55252 Mainz-Kastel (DE); Papadopoulos, Periklis, 55124 Mainz (DE)
(74) Representative: Katzameyer, Michael

(57) **Abstract**

The present invention relates to a process for particle synthesis on a superamphiphobic or superoleophobic surface comprising at least the followings steps:
a) providing a substrate having at least one superamphiphobic or superoleophobic surface, i.e. a surface exhibiting an apparent macroscopic contact angle of at least 140° with respect to 10 µl sized drops of liquids having a surface tension of not more than 0.06 N/m, in particular oils, alkanes, and aromatic compounds;
b) providing drops of a liquid material to be solidified on said superamphiphobic or superoleophobic surface;
c) maintaining the drops of a liquid material in contact with said at least one superamphiphobic or superoleophobic surface while the solidification of the liquid material to be solidified takes place and particles are formed, wherein the solidification of the liquid material is induced by at least one of the following: evaporation of at least one organic component of the liquid material, one or more phase transitions, cooling, exposure to radiation, e.g. visible light, UV or electron beam, or combining reactants to initiate a chemical reaction, in particular a polymerization reaction.

A second aspect of the invention relates to a device for synthesizing particles comprising a superamphiphobic or superoleophobic surface as defined above.

## Description

### Background of the invention

The present invention relates to a process and device for particle synthesis on a superamphiphobic or superoleophobic surface. More specific embodiments of the invention relate to processes and devices for synthesis of composite particles or particles with 1, 2 or more phases on a superamphiphobic surface or superoleophobic surface.

The technology for synthesizing particles, in particular polymeric particles, over a wide range of sizes and functionalities from a variety of materials is well developed. Different kinds of particles have applications in nearly any industrial field including e.g. coatings, drug delivery, protein analysis, cosmetics, food industry etc.

Most recently, composite particles, optically anisotropic particles, or particles with 2 or more chemically heterogeneous phases, often called janus particles, are attracting much attention because of their potential applications as colloidal surfactants, chemical and biological sensors, display materials, controlled release systems etc. Many approaches have been reported to synthesize polymeric janus particles, including phase separation in solvent, microfluidics, immobilization. Magnetic particles have found many biomedical applications, e.g. in immunoassay or for protein analysis. However, most known approaches for preparing either classical one-phase particles or particles with 2 or more phases involve the use of large amounts of solvent, processing liquid, emulsifiers, stabilizators, and/or require sophisticated and costly equipment.

It is known that nearly spherical aggregates of colloidal particles, called supraballs, can be produced by evaporating an aqueous colloidal dispersion on a superhydrophobic surface (Rastogi et al., Adv. Mater 2008, 20, 4263-4268; Marin et al., PNAS, vol. 109, no. 41, 16455-16458 (2012)). These authors used aqueous dispersions since organic dispersions would wet their superhydrophobic layer. After evaporation the nanoparticles stick together by physical (Van der Waals interactions) and not chemical interactions. The supraballs form flat patches in contact with the superhydrophobic surface. The presented techniques did not provide a solution to embed the nanoparticles in a continuous phase.

Therefore, an object of the present invention is to provide new, simple and cost-effective means for preparing particles, in particular composite particles, optically anisotropy particles, or particles with one, two or more phases, which require no or only a small amount of solvent, emulsifiers are not essential, no complex equipment and which can be flexible adapted to the synthesis of different kinds of particles.

This objective has been achieved according to the invention by providing the process and device for particle synthesis on a superamphiphobic or superoleophobic surface acording to claims 1 and 15, respectively. Additional aspects and more specific embodiments of the invention are the subject of further claims.

### Description of the invention

The process for particle synthesis on a superamphiphobic or superoleophobic surface according to claim 1 comprises at least the followings steps:
a) providing a substrate having at least one superamphiphobic or superoleophobic surface, i.e. a surface exhibiting an apparent macroscopic contact angle of at least 140° with respect to 10 µl sized drops of liquids having a surface tension of not more than 0.07 N/m, preferably not more than 0.06 N/m, in particular oils, alkanes, and aromatic compounds;
b) providing drops of a liquid material to be solidified on said superamphiphobic or superoleophobic surface;
c) maintaining the drops of a liquid material in contact with said at least one superamphiphobic or superoleophobic surface while the solidification of the liquid material to be solidified takes place and particles are formed.

The term "superoleophobicity" as used herein generally means an extremely low affinity or extremely high repellency for liquids of low surface tension such as oils, alkanes, liquid crystals, surfactant-containing solutions, alcohol-containing solutions, etc. A superoleophobic surface typically exhibits an advancing contact angle of at least 140°, preferably at least 150°, with respect to 10 µl sized drops of liquids having a surface tension of not more than 0.07 N/m, preferably not more than 0.06 N/m, e.g., oils, alkanes, aromatic compounds, liquid crystals, surfactant-containing solutions, alcohol-containing solutions, etc.

The term "superamphiphobicity" as used herein generally means an extremely low affinity or extremely high repellency for water as well as for liquids of low surface tension such as oils, alkanes, liquid crystals, surfactant-containing solutions, alcohol-containing solutions, etc. A superamphiphobic surface typically exhibits an advancing contact angle of at least 140°, preferably at least 150°, with respect to 10 µl sized drops of water and also an advancing contact angle of at least 140°, preferably at least 150°, with respect to 10 µl sized drops of liquids having a surface tension of not more than 0.07 N/m, preferably not more than 0.06 N/m, e.g., oils, alkanes, and aromatic compounds, liquid crystals, surfactant-containing solutions, alcohol-containing solutions, etc.

A droplet of water or a liquid having a surface tension of not more than 0.07 N/m deposited on a superamphiphobic surface rolls off easily, leaving the surface dry and clean. The same applies to a droplet of a liquid having a surface tension of not more than 0.07 N/m deposited on a superoleophobic surface. Typically, the roll-off angle of a 10 µl sized drop of a liquid having a surface tension of not more than 0.07 N/m, preferably not more than 0.06 N/m, in particular oils, alkanes, liquid crystals, surfactant-containing solutions, alcohol-containing solutions, etc., and aromatic compounds on a superoleophobic or superamphiphobic surface is below 30°, preferably below 10° or even below 5°. If the roll-off angle is above 30° or the advancing contact angle is below 140° for a 10 µl sized drop, then the layer is not superoleophobic for this particular liquid. On a superamphiphobic surface, the roll-off angle of water is also below 30°, preferably below 10°.

To generate a superamphiphobic surface, 3 key features are required: a low surface energy of the material, a topography with roughness on the microscale (a roughness also on the nanoscale may be advantageous), and the presence of overhang structures. In this case, air (or another gas present) can be entrained when placing sessile drops on top, which leads to the low adhesion between the drop and the surface.

Methods for generating such superamphiphobic surfaces are known in the art and some preferred methods resulting in superamphiphobic surfaces with especially favourable characteristics are described below. Methods for generating superoleophobic surfaces are also known in the art (e.g. Kota et al., Nature Communications 3:1025 (2012))

The present inventors have found that a superamphiphobic surface can be advantageously used for particle formation from drops of a liquid material capable to be solidified which are provided on said surface. Due to the repellency and low adhesion of the superamphiphobic surface to liquid drops the contact area of the liquid drops with the surface is minimized while the solidification of the drops takes place and particles are formed. The same applies to the use of a superoleophobic surface if drops of a liquid material having a surface tension of not more than 0.07 N/m, preferably not more than 0.06 N/m, are provided on said superoleophobic surface.

The liquid material to be solidified may be principally any material capable to be solidified in response to a specific stimulus. The stimulus may be for example, evaporation of at least one organic component of the liquid material, such as an organic solvent, a monomer component, or evaporation of a byproduct, one or more phase transitions, cooling, exposure to radiation, e.g. visible light, UV or electron beam, gamma rays, or combining reactants to initiate a chemical reaction, in particular polymerization reaction.

Thus, the liquid material to be solidified may be, e.g., a solution, a suspension, or dispersion in an aqueous, aqueous/organic or organic solvent, aqueous/non-polar or non-polar solvent or dispersant, a melt, a material above a glass transition temperature or a phase transition temperature, a gel or liquid crystals or combinations of those.

In a specific embodiment, the liquid material to be solidified comprises one or more polymerizable monomers and the solidification of this material takes place in the course of a polymerization reaction and formation of the corresponding polymer.

The following Table 1 shows the contact angle Θ, roll-off angle α, and surface tension γ of some exemplary monomers on a superamphiphobic surface.

However, it is clearly evident for the skilled artisan that there are numerous monomers with suitable contact angles and surface tensions and further monomers for use in the process of the present invention can by readily identified in the relevant literature, including general handbooks or review articles, or by means of routine experiments.

**Table 1**

| | **Θ** | **α** | **γ** (mN/m) |
|---|---|---|---|
| Styrene | 158° | 6° | 34 |
| Methyl methacrylate | 156° | 10° | 28 |
| Acrylic acid | 154° | 7° | 29 |
| Adipoylchloride | 152° | 9° | 38 |
| Ethylenediamine | 152° | 16° | 42 |

The drops of the liquid material to be solidified may comprise further components which are not liquid under the conditions and temperatures used in the process of the invention (e.g. nanoparticles) or components which do not solidify under the conditions and temperatures used in the process of the invention. In the latter case, for example particles with a liquid core can be produced.

The polymerization reaction may be induced by electromagnetic or electron beam irradiation, temperature, catalyst, or by mixing different reactants.

The term "polymerization reaction" or "polymerization" as used herein is meant to include any kind of linking reaction resulting in a product composed of a plurality of repeating units. In particular, the term "polymerization" includes free-radical polymerization, polycondensation, polyaddition, cycloaddition, ionic polymerization, coordination polymerization and group transfer polymerization. A non-limiting list of typical reactions and products are given in the following:

### Free-radical polymerization:

A free-radical polymerization may start upon decay of an initiator which thereby provides starter radicals. A non-limiting list of typical reactions and products is given in the following:
● Energy causes an initiator to provide radicals. Energy can be introduced thermally, chemically, photochemically or electrochemically.
● A self-initiated polymerization without initiator at high or elevated temperature or in the presence of high-energy radiation is also possible, in particular for styrene compounds, 2-vinyl pyridine, 2-vinyl furan, 2-vinyl thiophene, acenaphthalene, methyl methacrylate, *p*-vinyl phenol, etc.

Typical monomers for a free-radical polymerization are:
Vinyl compounds CH₂=CHR (R = Cl, F, OOCR', C₆H₅),
vinyliden compounds CH₂=CR₂ (R= Cl, F, CN),
acrylic compounds CH₂=CHR (R = CN, COOH, COOR'),
methacrylic compounds CH₂=C(CH₃)R (R = CN, COOH, COOR'), allyl compounds CH₂=CH-CH₂R (R= OH, OR', OOCR'),
the corresponding divinyl, diacryl, and diallyl compounds, CH₂=CH-Z-CH=CH₂ and 1,3-dienes, CH₂=CR-CH=CH2 (R = H, CH₃, Cl), where R' can be a linear or branched alkyl group (substituted or unsubstituted), or an aryl group (substituted, e.g. with alkyl or halogen, or unsubstituted), in particular phenyl or a substituted phenyl.

Polyaddition and Polycondensation: A non-limiting list of typical reactions and products are given in the following:
Polyaddition:
   1. Polyurethanes are produced by reacting an isocyanate containing two or more isocyanates groups per molecule (R-(N=C=O)ₙ with n≥2) with a polyol containing on average two or more hydroxy groups per molecule (R'-(OH)ₙ with n≥2, preferably in the range from 2 to 4).
   2. Polyureas are produced by reacting an isocyanate containing two or more isocyanates groups per molecule (R-(N=C=O)ₙ with n ≥2) with water or a polyamine containing on average two or more amino groups per molecule (R'-(NH₂)ₙ with n ≥2, preferably in the range from 2 to 4).
   3. Polythioethers are produced by reacting a vinyl compound containing two or more vinyl groups per molecule (R-(HC=CH₂)ₙ with n ≥2) with a polythiol containing on average two or more thiol groups per molecule (R'-(SH)ₙ with n ≥2, preferably in the range from 2 to 4).
   4. All sorts of epoxy resins, which are produced by reacting an epoxide compound containing two or more epoxide groups per molecule (R-(HC[O]CH₂)ₙ with n ≥2, preferably in the range from 2 to 4) with one or more types of polyol, polyamine or polythiol, containing on average two or more functional groups per molecule.
   5. Further polymers are obtainable by hydrosilation, β-propionic acid addition, Diels-Alder reactions etc.

For reaction 1 to 5: R, R' can be a linear or branched alkyl group (substituted or unsubstituted), or an aryl group (substituted, e.g. with alkyl or halogen, or unsubstituted), in particular phenyl or a substituted phenyl.

### Polycondensation (AA/BB reaction type):

1. A non-limiting list of typical reactions and products are given in the following: AA/BB reaction type:
   n A-X-A + n B-Y-B → A-(X-Y)ₙ-B+ condensation product
2. AB reaction type:
   n A-X-B → A-(X)ₙ-B + condensation product
   A: COOH, COOR, COCl, SO₂Cl, Cl. B: NH₂, OH, ONa, OK.
3. Cyclic monomers/oligomers like lactams (ε-caprolactam) and lactones (ε-caprolacton) can be used as well. Examples that are especially relevant for n=3 forming network polymers
   ● Polycarbonates are produced by reacting phosgene (COCl₂), diphosgene, triphosgen, monohalogen compounds, carbonic monoesters, carboxylat ester, especially dimethyl terephthalate and terephthalic acid with a polyol, especially bisphenol A or ethylene glycol containing on average two or more hydroxyl groups per molecule (R'-(OH)ₙ with n ≥2, preferably in the range from 2 to 4), where R' can be a linear or branched alkyl group (substituted or unsubstituted), an aryl group (substituted, e.g. with alkyl or halogen, or unsubstituted), in particular phenyl or a substituted phenyl.
   ● Melamine resins polycarbonates are produced by reacting melamine or urea with formaldehyde (CH₂O) in the presence of a catalyst (bases for melamine, acids for urea).
   ● Phenol formaldehyde resins are produced by reacting phenol or substituted phenol like phthalic acid with formaldehyde, in the presence of a catalyst (acid or base).

### Ionic Polymerization:

### a) Anionic

### Initiation modes:

Broenstedt bases or Lewis bases (for example alkali metals, alkyl metals or alcoholates) or by electron transfer.

### Monomers in general: electron poor substituents

Specific examples: styrene CH₂=CH(C₆H₅) and phenyl substituted derivatives, α-methylstyrene CH₂=C(CH₃) (C₆H₅), acrylic compounds CH₂=CHR (R=CN, COOR', CO-NRR'), methacrylic compounds CH₂=C(CH₃)R (R = CN, COOR'), vinyliden cyanide CH₂=C(CN)₂, 1,3-dienes, CH₂=CR-CH=CH2 (R= CH₃, Cl), isocyanates R-N=C=O, oxiranes and derivatives, ketones RCOR', aldehydes RCOH, thiiranes, glycolides, N-carboxy anhydrides of α-amino acids, cyclosiloxanes, lactams (ε-caprolactam, lauryllactam) and lactones (ε-caprolacton) (R can be one of the groups listed above. Alternatively, R, R' can be a linear or branched alkyl (substituted or unsubstituted), phenyl, naphthyl, any aromatic unit which is substituted (e.g with alkyl or halogen, or unsubstituted, alkoxy, oligo- and polyethylene oxide).

### b) Cationic

### Initiation modes:

Broenstedt acids, Lewis acid, carbenium salts. Monomers in general: electron rich substituents R', heteroatoms Z.

Specific examples: olefins CH₂=CRR', 1,3-dienes CH₂=CR'-CR=CH2, vinyl aromatics CH₂=CR-C₆H₅, N-substituted vinyl amines CH₂=CH-NRR', vinyl ethers CH₂=CH-OR, vinylesters, CH₂=CH-O-CO-R,oxiranes, some lactams (ε-caprolactam) and lactones (ε-caprolacton). R, R' can be linear or branched alkyl (substituted or unsubstituted), phenyl, naphthyl, any aromatic unit which is substituted (e.g with alkyl or halogen) or unsubstituted, alkoxy, oligo- and polyethylene oxide.

### Coordination Polymerization:

a) Multi-Site Polymerization/Single-Site Polymerization
   Catalysts: e.g. Ziegler-Natta catalyst/ metallocene catalysts, polymetallocenes
   Monomers: Need to be liquid for processing on superamphiphobic surface: some aliphatic, cycloaliphatic olefins and dienes are possible, styrene.
b) Methatheses (e.g. ring-opening/closing polymerization) (for example, release of ethen)
   Catalysts: metal carbene complexes such as Schrock carbene or Grubbs I or II carbene.
   Monomers for ROMP (ring opening methathesis polymerization): cycloolefins (e.g. norbornene)
   Monomers for ADMET (acyclic diene methathesis polymerization): non-conjugated dienes, separated with at least two methylene groups. (e.g. 1,5-hexadiene).

### Group-Transfer Polymerization (GTP):

Catalysts: active group of initiator is transferred in presence of a nucleophilic or electrophilic catalyst. (e.g. silyl ketene acetal as initiator, metallocenes as catalyst)

### Monomers: (meth)acrylates

More specifically, in the case of a polymerization said drops of a liquid material may contain monomers selected from the group comprising vinyl compounds CH₂=CHR (R = Cl, F, C₆H₅, OOCR' (with R' = alkyl (substituted or unsubstituted), phenyl, naphtyl, any aromatic unit which is substituted or unsubstituted, alkoxy, oligo- and polyethylene oxide), vinyliden compounds CH₂=CR₂ (R = Cl, F, CN), acrylic compounds CH₂=CHR (R = CN, COOH, COOR'), methacrylic compounds CH₂=C(CH₃)R (R = CN, COOH, COOR'), allyl compounds CH₂=CH-CH₂R (R = OH, OR', OOCR'), the corresponding divinyl, diacryl, and diallyl compounds, CH₂=CH-Z-CH=CH₂ and 1,3-dienes, CH₂=CR-CH=CH2(R = H, CH₃, Cl), isocyanates, polyamines, polyols, polythiols, epoxides, oxiranes, ε-caprolactames, ε-caprolactones, or oligomers derived therefrom. R, R' can be linear or branched alkyl (substituted or unsubstituted), phenyl, naphthyl, any aromatic unit which is substituted (e.g. with alkyl or halogen) or unsubstituted, alkoxy, oligo- and polyethylene oxide.

In one embodiment, the drops of a liquid material to be solidified are provided on said superamphiphobic or superoleophobic surface by depositing drops of one or more liquids on said surface.

The drops of one or more liquids may be deposited on said surface by any method known in the art for this purpose. More specifically, the drops are deposited by means of ink jet printing using one or more nozzles, spraying, spray coating, spray painting, thermal spraying (including plasma spraying, detonation spraying, wire arc spraying, flame spraying, high velocity spraying, warm spraying, cold spraying), electrostatic coating, electrostatic spraying, electro-spinning, electro-jetting.

Ink jet printing has proven to be an especially convenient and effective means for depositing drops on a superamphiphobic or superoleophobic surface. With ink jets, microdrops can be precisely positioned and timed. Typically, the smallest drops are 20-30 µm diameter. Larger drops can be generated by injecting multiple drops successively or using nuzzles with a larger diameter. Using two inkjets, different mixtures can be generated. To reduce impact, drops can be ejected upward at a certain angle and landing after a parabolic flight on the superamphiphobic or superoleophobic surface. To produce even smaller drops the nozzle can also be coated with a superamphiphobic or superoleophobic layer.

The liquid drops may consist of or comprise a liquid material to be solidified as defined above. Alternatively, drops of a liquid material capable to be solidified are produced by merging at least two kinds of primary drops containing different components. The different primary drops may e.g. contain reactants of a chemical reaction and/or a catalyst or initiator, whereby a chemical reaction such as a polymerization reaction is initiated after merging.

Alternatively, the drops of a liquid material to be solidified are generated on said superamphiphobic or superoleophobic surface by depositing at least one solid, e.g. a powder, film or fibrous material, on said surface and subsequently melting the same.

The solid may comprise, e.g., a polymer, polymer blend, monomer, smectic, cholesteric, or crystalline mesogenes.

The deposition and melting of the solid material may be effected by any suitable method known in the art. More specifically, if the feed stock is solid, pulverized or ground material can also be deposited by sedimentation of the material, for example making use of the gravitational field of the earth, an electric or magnetic field. The most suitable method depends on whether the particles are charged or show a magnetic moment. The pulverized or ground material can be liquefied or partially liquefied after deposition. To produce monodisperse particles, or particles with a low polydispersity the pulverized or ground material can be sieved using a mesh before deposition.

The melting can be performed by heating the substrate, the superamphiphobic or superoleophobic surface, or the superamphiphobic or superoleophobic surface and the substrate. For example, the substrate or the superamphiphobic or superoleophobic surface can be put on a hot plate. The substrate can also be heated electrically, using light or IR radiation. If the substrate contains openings (mesh, fiber, etc.) the deposited material can be molten using warm or hot gas stream. Usually, melting of the solid material and forming of, typically spherical, homogenous particles only takes a short period of time, typically less than 15 minutes, such as 1-10 minutes, or even only a few seconds in some cases.

In a preferred embodiment of the present invention, the drops of a liquid material or the particles resulting from solidification are moved on said superamphiphobic or superoleophobic surface.

Moving the drops and/or particles helps to prevent permeation of liquid material into the superamphiphobic or superoleophobic surface, facilitates to obtain a desired shape of drops/particles, and is in particular advantageous if the claimed process is to be performed as a continuous process.

The movement may be effected by any suitable means known in the art, e.g. by rolling on a tilted surface, by shaking, vibrating or spinning, or by means of a gas flow.

In specific embodiments, a movement of the drops is generated by keeping them on a curved substrate (e.g. a parabolic watch glass) and applying a circular motion by vibrating the substrate or by letting the particle roll down a superamphiphobic or superoleophobic tilted plane. A tilt of only few degrees (less than 20°, in general even less than 10°) is sufficient to keep drops and the particles rolling.

The size and shape of the particles obtainable with the process of the invention are not especially limited. The particles may be essentially spherical, elliptical or asymmetric particles. In a preferred embodiment, the particles are essentially spherical particles, i.e. particles having a ratio of the largest diameter to the smallest diameter dₘₐₓ/dₘᵢₙ in the range from 1 to 1.5, more specifically from 1 to 1.2 or from 1 to 1.1 or even from 1 to 1.05.

Advantageously, the process of the present invention enables to produce particles having sizes in the micrometer range. Typically, the mean particle diameter along the shortest particle axis is at least 0,5 µm, preferably at least 1 µm or at least 5 µm. The average particle diameter is in the range of 0.5 µm to 5 mm, preferably between 1 µm to 3 mm and even more preferably between 5 µm to 0.5 mm.

The process of the present invention is suitable for the synthesis of one component particles. They may be produced, e.g., by melting a, preferably polymeric, powder, a liquid crystal, or liquid crystalline polymer on said superamphiphobic or superoleophobic surface, in order to obtain liquid drops. The drops can be solidified e.g. by cooling.

The process of the present invention is particularly suitable for the synthesis of composite particles. The term "composite particles" as used herein refers to particles with 2 or more components which typically form 2 or more chemically and/or structurally different phases. The components may be different organic compounds, e.g. different polymers, or at least one organic compound and at least one inorganic compound.

In one specific embodiment, the composite particles are microparticles which comprise at least one polymeric matrix and organic or inorganic nanoparticles incorporated in said polymeric matrix. The nanoparticles can be homogeneously distributed within the microparticle or be enriched in certain regions of the microparticle.

Nanoparticles may be added, for example, to adjust the mechanical or heat conducting properties of the composite particles. In a specific embodiment, the nanoparticles are responsive to a stimulus, in particular selected from the group consisting of temperature, electromagnetic irradiation, and presence of a magnetic field, an electric field, a gravitational field, or a shear field. This enables to manipulate the composite particles in response to such a stimulus as well.

Such composite particles may be produced, e.g., by melting a, preferably polymeric, powder on said superamphiphobic or superoleophobic surface, where the powder comprises magnetic nanoparticles, in order to obtain liquid drops. The composite particles produced from said liquid drops by solidification (cooling) also comprise said magnetic nanoparticles and - if formed in the presence of a magnetic field - have a permanent magnetic moment and are capable to be rotated in an external magnetic field. This enables to manipulate the particles in an especially simple and effective manner.

In another specific embodiment, the composite particles are particles with 2 or more polymeric phases. The polymeric phases may also include organic or inorganic nanoparticles, or polymers with mesogenic side groups, also called "liquid crystalline polymers". Such particles are e.g., obtainable by heating and melting of polymer blends or powders on a superamphiphobic or superoleophobic surface.

The particles with 2 or more polymeric phases may be core-shell particles, e.g. comprising one or more hydrophilic bulk phase and a hydrophobic surface phase or vice versa, comprising a hydrophobic surface phase and one or more less hydrophobic bulk phases or vice versa, or comprising one or more hydrophilic bulk phases and a less hydrophilic surface phase or vice versa.

The particles with 2 or more polymeric phases may have compartments of different hydrophobicity or hydrophilicity on their surface, often called "patchy particles". A special case of patchy particles are particles with janus-properties. It is also possible to adjust the janus-properties by adjusting the bulk phase, e.g. by adjusting the volume ratios of the components or the duration of phase separation. After a defined period of phase separation the particles can be solidifying in a non-equilibrium state.

Such particles with more than 2 polymeric phases can be prepared, e.g., with two nonpolar polymers (e.g. polystyrene (PS) and poly(methyl-methacrylate (PMMA)), and/or a hydrophilic polymer (e.g. polyethylenoxide).

In a more specific embodiment, (e.g. electrospun) polymer fibres are placed on a superamphiphobic or superoleophobic surface. For non-entangled polymer or a polymer-nanoparticle composite, melting should lead to a Rayleigh instability and a string of monodisperse particles will form. To facilitate this process, superamphiphobic or superoleophobic layers with grooves on the 10 µm length scale are preferably used.

In another specific embodiment of the invention, dispersions, in particular aqueous, aqueous-polar, aqueous-nonpolar, or organic dispersions, of different particles (nanoparticles) or particle-polymer mixtures at appropriate ratios, are mixed, and drops of appropriate size are placed on a superamphiphobic or superoleophobic layer and the dispersant, in particular polar, non-polar or organic, preferably organic or non-polar, dispersant is evaporated.

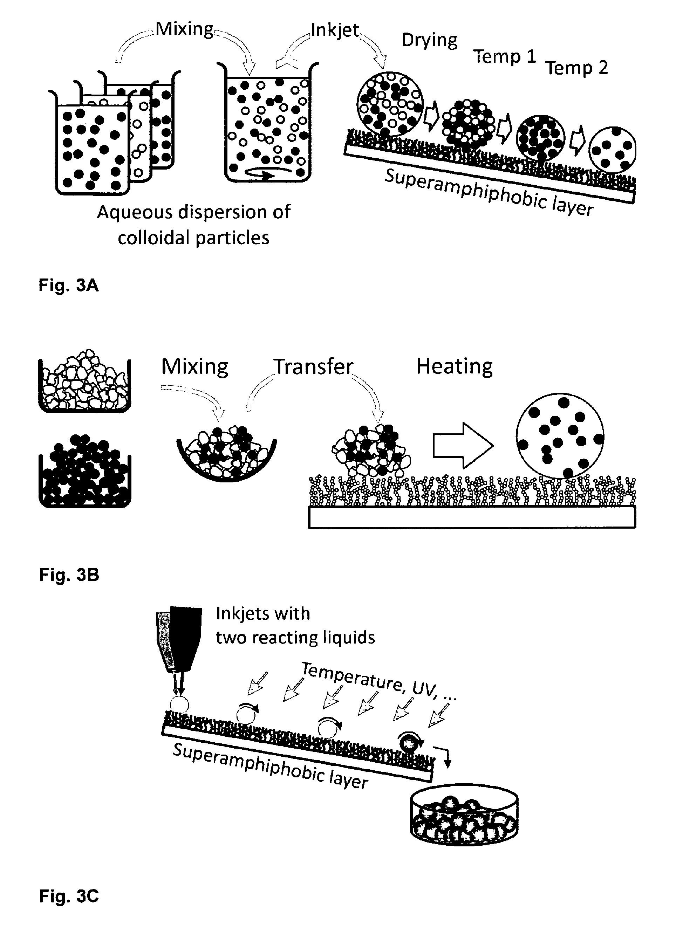

Subsequent heating of the solid residue up to one or more selected temperatures (depending on the melting temperatures of the different components) leads to particles with one or more continuous phases, depending on the specific composition and melting temperatures. Also, heterogeneous composite particles can be formed by introducing a component which does not melt under the heating temperature(s) used. This approach is schematically illustrated in Fig 3B.

Further, particles with a liquid core can be formed by introducing components which do not solidify under the temperature(s) and conditions used. Such components may be for example oligomers, alkanes, siloxanes, aqueous dispersions, low molecular liquid crystals, organic dispersions, or combinations of those. Particles with a liquid core are special types of core-shell particles and can be prepared by phase separation as described above. The polymeric material forming the shell needs to be more hydrophobic to be able to enclose the less hydrophobic components under the conditions where phase separation occurs. After enclosure of the components which do not solidify under the temperature(s) and conditions used, the shell material can be solidified, for example by cooling below the glass transition temperature of material forming the shell. Particles with a liquid core may be, e.g., of interest for the storage and/or delivery of pharmaceutical drugs, optical devices, photonic crystals, and other active components.

In another specific embodiment of the invention, optically anisotropic particles are generated. In such particles, the anisotropic behaviour of light is caused by the presence of orientated optical centers, i.e. specific molecules (called mesogenes, liquid crystals, liquid crystalline polymers) or domains formed by such molecules. Such optically anisotropic particles may for example be liquid crystalline particles or may comprise liquid crystalline domains.

Many thermotropic liquid crystalline materials are based on benzene rings since a structurally rigid, highly anisotropic shape of the molecules or polymeric side groups is the main criterion for liquid crystalline behaviour. If a molecule has a rigid, highly anisotropic shape it is called a "mesogene". A polymer can have many mesogenic side groups. Widely used mesogenic groups are N-(4-methoxybenzylidene)-4-butylaniline (MBBA) or cyanobiphenyls. The mesogens may align in different ways, forming a nematic phase, smectic phase, cholesteric phase, blue phase, ferroelectric phase, discotic phase or banana phase. Transitions between certain phases can be induced by temperature. A large number of mesogenic molecules or polymers containing mesogenic side groups are commercially available.

Optically anisotropic particles may be monophasic particles, e.g. MBBA or 4-cyano-4'-alkylbiphenyl, wherein the alkyl can vary between C5 and C14, or composite particles comprising 2 or more components forming 2 or more phases. The 2 or more phases can be formed by mesogenes, liquid crystalline polymers or polymers or mixtures thereof. Mixing polymers with mesogenes or liquid crystalline polymers is especially suitable to fabricate composite particles, and in particular patchy particles or janus particles. Nanoparticles, in particular magnetic nanoparticles or pigments can be added to one or both components to fabricate multifunctional particles. These can be manipulated by magnetic, thermal, and/or electric stimuli and might be promising e.g. as electronic print, photonic crystals or optical devices.

Typically, examples of said optically anisotropic particles are selected from the group consisting of N-(4-methoxybenzylidene)-4-butylaniline (MBBA) or 4-cyano-4'-alkylbiphenyl. Further examples can be found in Liquid Crystal Polymers II/III (N.A. Plate, ISBN:978-3-540-38816-6 (online)).

The shape of the at least one superamphiphobic or superoleophobic surface used in the process of the present invention is not especially limited. Typically, said superamphiphobic or superoleophobic surface comprises or consists of a 2-dimensional extended, curved or essentially flat surface. A curved or tilted surface facilitates the movement of drops/particles thereon.

In a specific embodiment, said at least one superamphiphobic or superoleophobic surface is provided on a carrier substrate. More specifically, said carrier substrate is porous and/or contains through-going openings, such as a micro- or mesoporous foam or a mesh.

The material of the carrier substrate is not especially limited and may be any material capable to be coated with a superamphiphobic or superoleophobic layer, for example metal, glass, ceramics, plastics etc.

The superamphiphobic layer of the superamphiphobic surface used in the process of the present invention preferably comprises strings, columns, aggregates or a fractal-like arrangement of nano- or microparticles having a mean diameter in the range of 20 nm to 2 µm, preferably 40 nm to 200 nm. The nano- or microparticles either consist of a material of low energy surface or are coated with a material of low surface energy, wherein the low surface energy material is characterized in that the surface energy (air - substrate surface) is less than 0.03 J/m², preferably below 0.02 J/m².

The superamphiphobic or superoleophobic layer typically has a mean thickness between 0.5 µm and 1 cm, preferably between 1 µm and 1 mm, more preferred between 5 µm and 100 µm.

The superamphiphobic coating layer can be provided on a carrier substrate by depositing suitable particles having a mean diameter in the range of from 20 nm to 2 µm on the substrate surface, e.g. by spray coating, sedimentation or by growing the particles on the carrier substrate, and, optionally, coating the particles with a hydrophobic top coating. In more general the superamphiphobic layer can be prepared from any type of material showing overhang structures, including elliptical aggregates, fibres, umbrella-or nail-like structures. Even superamphiphobic aerosols are suited.

If the superamphiphobic layer is made of particles, these particles may be organic or inorganic particles or mixtures of both, e.g., polymer particles, (titanium)oxide particles, ceramic particles, silica particles or particles coated with a silica shell wherein the silica particles or particles coated with a silica shell are further coated with a hydrophobic top coating.

If the carrier substrate has through-going openings, e.g. having a mean diameter in the range from 0.1 µm to 2 mm, preferably in the range from 1 µm to 200 µm, a superamphiphobic layer can be provided thereon by, e.g., depositing soot particles having a mean diameter in the range of from 20 nm to 2 µm, coating the soot particles with a silica shell, e.g. by the Stöber method, calcinating the particles and coating the calcinated particles with a hydrophobic coating. This method corresponds to an analogous method for producing a superamphiphobic coating on a glass substrate developed by the present inventors and described in Science 335, 67 (January 2012).

In an alternative embodiment, the superamphiphobic layer can be provided on a carrier substrate, with or without through-going openings, by growing silica particles on the substrate surface following the Stöber method, that is formation of silica by hydrolysis and condensation of tetraethoxysilane (TES) or other organic silanes catalyzed by ammonia. Since silica does not grow homogenously on the surface in the course of this process, the substrate surface becomes decorated with silica particles. The size of the silica particles can be adjusted by varying the reaction parameters such as the amount of silane.

A second, closely related aspect of the invention pertains to a device for synthesizing particles, in particular polymeric particles, comprising
- a substrate having at least one superamphiphobic or superoleophobic surface as defined and described above
- means for depositing liquid drops or solid materials on said superamphiphobic or superoleophobic surface
- means for moving drops or particles on said superamphiphobic or superoleophobic surface and, optionally,
- means for heating, cooling and/or irradiating drops or particles on said superamphiphobic or superoleophobic surface.

A further related aspect of the present invention pertains to the use of a substrate having at least one superamphiphobic or superoleophobic surface for synthesizing particles, in particular polymeric particles.

### Brief Description of the Figures

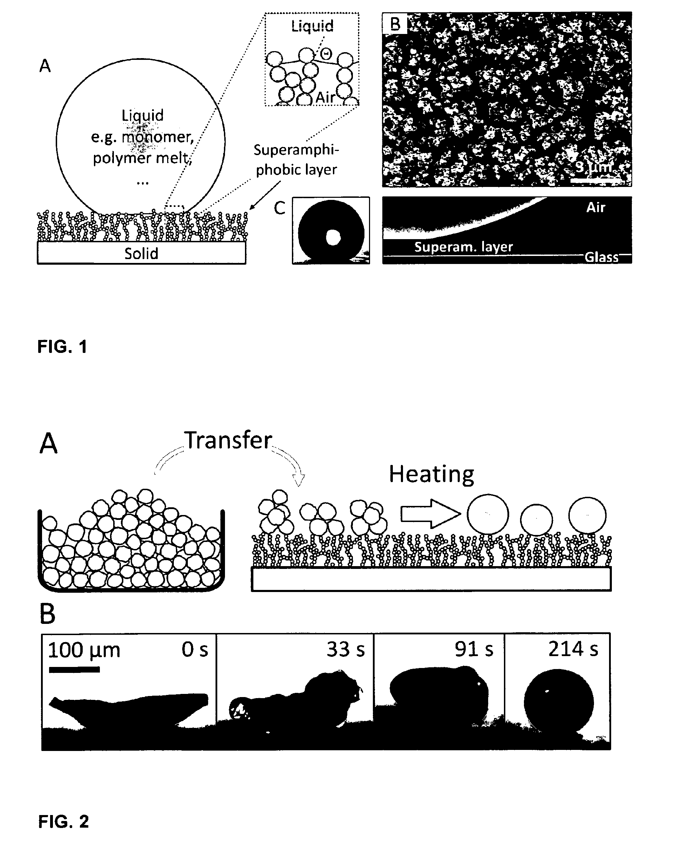

**Fig. 1** illustrates a superamphiphobic surface used in the process of the present invention and the interface between the liquid and the superamphiphobic surface
   (A) cross-section of a liquid drop on a superamphiphobic layer and a magnified view of the interface between the liquid and the superamphiphobic layer; (B) Scanning electron microscope (SEM) image of a superamphiphobic layer; (C) Video image and (D) vertical cross-section through a drop of styrene on a superamphiphobic layer imaged with a confocal microscope (Scale bar in (C) is 1 mm). The 6 µL drop was labeled with 0.04 mg/mL N-(2,6-diisopropylphenyl)perylene-3,4-dicarbonacidimide.
**Fig. 2** illustrates the preparation of spherical particles by heating and melting a solid deposited on a superamphiphobic surface
   **2A:** shows schematically the transfer of non-spherical solid particles onto a superamphiphobic surface and the formation of spherical drops by heating and melting the solid particles
   **2B:** shows confocal micrographs of the formation of spherical drops by heating and melting a solid on a superamphiphobic surface
**Fig. 3** shows schematically different alternatives for synthesizing particles in a process according to the invention;
   **3A:** Preparation of a mixed dispersion of colloidal particles, deposition of drops of the mixture on the superamphiphobic surface and drying, (partial) melting of the solid residue;
   **3B:** Mixing of 2 solid components, transfer onto a superamphiphobic surface and heating
   **3C:** Combination of 2 reacting liquids on the superamphiphobic surface in order to obtain drops of the liquid material to be solidified
**Fig. 4** illustrates the solvent-free polymerization on a superamphiphobic surface according to the process of the invention.(A) scheme of experimental setup; (B,C) Particles synthesized from 15 wt% Bis-GMA, 84 wt% TEGDMA, 1 wt% phenylbis(2,4,6-trimethylbenzoyl)phosphine oxide (photoinitiator); (D) SEM image of a microsphere from 99 wt% TEGDMA with 1 wt% photoinitiator
**Fig. 5** illustrates the formation of polymer particles with 2 phases.
   Upper row: Sequence of video microscopy images showing an agglomerate of PS-dye and PMMA blends powder annealed at 170°C for 7 minutes. Lower row: fluorescent images of a mixed poly-(methyl methacrylate)/polystyrene (PS) particle directly after mixing, annealing for 10 min and 100 min at 150°C. Shortly after heating (about 10 min), the polymer phases separate and form a janus particle. After 100 min, the PS has almost covered the PMMA phase and forms a shell around it.

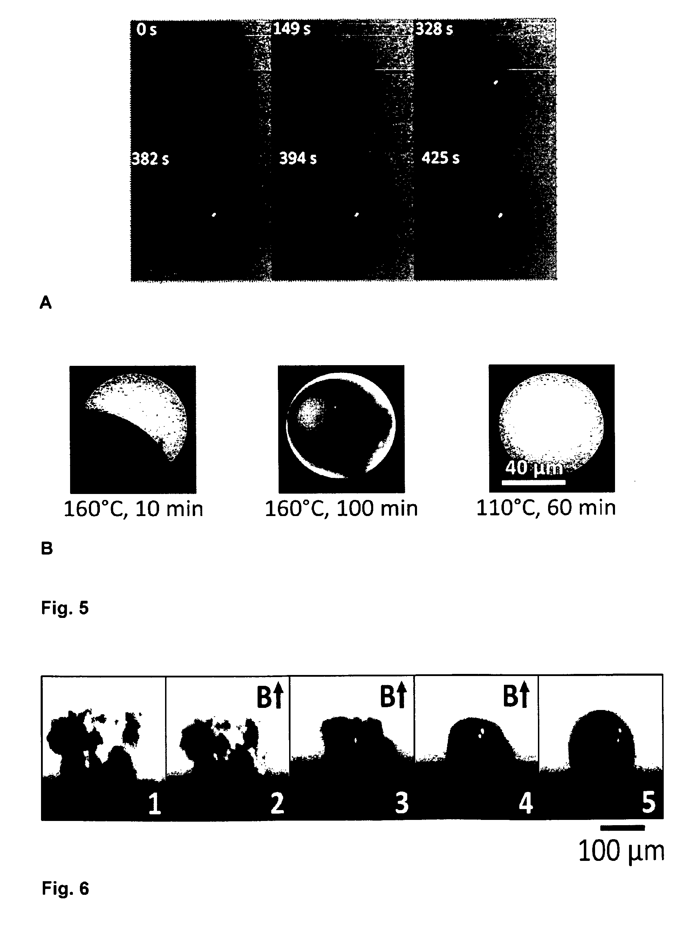

**Fig. 6** shows the formation of composite polymer particles by heating a polystyrene powder mixed with magnetite nanoparticles which has been deposited on a superamphiphobic surface. The presence of a magnetic field is indicated by "B↑".

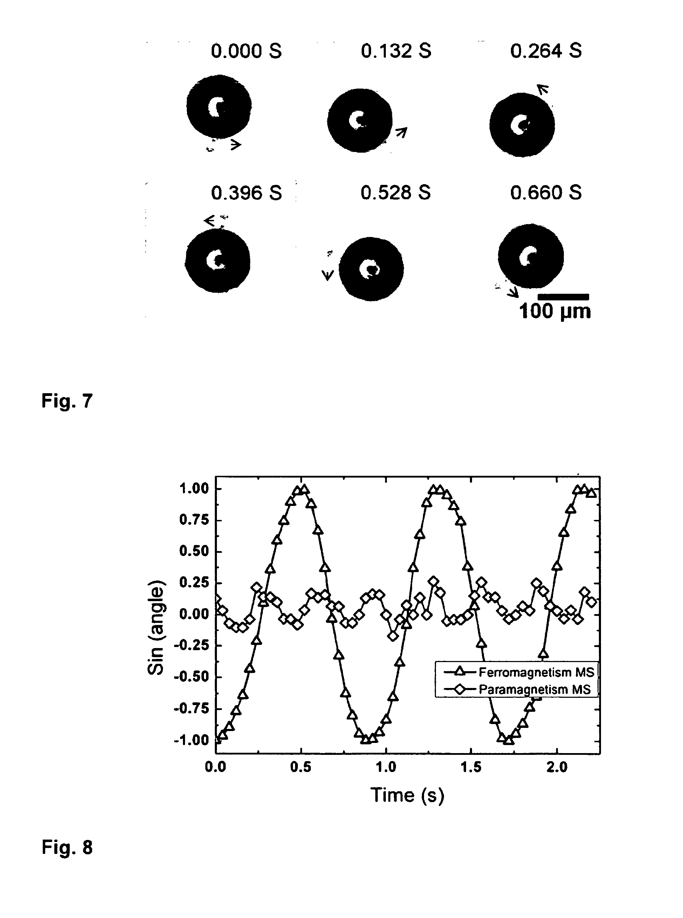

**Fig. 7** shows video microscope images of a polystyrene/- magnetite microsphere in water rotating in an external magnetic field. The orientation can be seen following the defect indicated by the arrow.
**Fig. 8** shows the orientation of a composite microsphere fabricated in the presence (triangle) and absence (rhombus) of an external magnetic field.

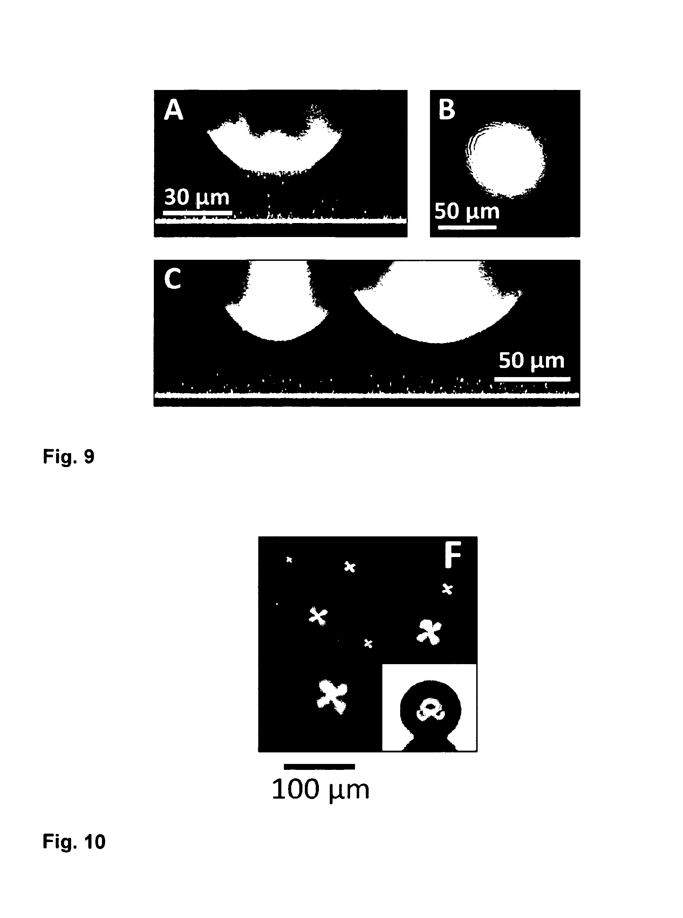

**Fig. 9** demonstrates the prevention of structural defects by moving the drops/particles during solidification
   (A) cross-section of a polystyrene particle on a superamphiphobic layer after heating to 100°C. (B) Polystyrene particle with the previously apparent contact region on the top right side. (C) Two polystyrene particles which had been moved while solidifying. Polystyrene was labeled with a rhodamine B dye.
**Fig. 10** shows a micrograph (top view through a polarization microscope) of 4-n-nonyl-4'-cyanobiphenyl 9CB liquid crystal particles produced on a superamphiphobic surface. Inset: Side view of a 9CB particle

The following non-limiting examples are provided to illustrate the present invention in more detail, however, without limiting the same to the specific features and parameters thereof.

### EXAMPLE 1

### Synthesis of homogenous polymer particles on a superamphiphobic surface

### Materials and methods:

### All chemicals were purchased from Sigma-Aldrich.

Phenylbis(2,4,6-trimethylbenzoyl)phosphine oxide (Irgacure 819, 97%) served as photoinitiator and was used without any further purification. Triethylene glycol dimethacrylate (TEGDMA, 95%), Bisphenol A glycerolate dimethacrylate (Bis-GMA), poly(ethylene glycol)dimethacrylate (Mₙ = 750) were used as monomers and were chromatographically purified. Therefore monomers were dilluted with dichloromethane and passed through an aluminium oxide column. Afterwards dichloromethane was removed by evaporation. MilliQ water was used (Sartorius Arium 611). The UV light source UVLQ 400 was provided from Dr. Gröbel UV-Elektronik GmbH.

Curved glas substrates (diameter = 10 cm, height = 1.5 cm) were coated with a superamphiphobic layer as described prior (ca. 1 min soot, 24 h TES, 600 °C for 2 h, 2h 30 min fluorosilane (1H,1H,2H,2H-Perfluorooctyltrichlorosilane)). Different monomer mixtures (wt %) were prepared, all containing 1 wt % Phenylbis(2,4,6-trimethylbenzoyl)phosphine oxide (Irgacure 819) as photoinitiator (Table 1). If the monomer system consisted of more than one component, beside the photoinitiator, the samples were supersonicated 15 min before adding the photoinitiator to achieve a homogenous solution. In the next step the photoinitiator was added to the monomer(s) and the samples were supersonicated another 15 min in darkness. The superamphiphobic glas substrate was placed on a one or two dimensional shaking machine. Rounds per minute (rpm) were adjusted to the viscosity of the monomer mixture and the reaction progress. In general the motion of the drop has to be garanteed and adjusted to the maximum value as good as possible over the entire process. Higher viscosity requires higher rpm to provide drop movement. The UV light source was located approx. 5-6 cm above the substrate. The mixture was applied to the surface using a pipette (drops had a diameter of 2 - 2.5 mm). The light source was manually pulsed in intervalls of 1 second until the polymerization noticeably started and the viscosity of the drop increased. This took in general about 20-25 s. The viscosity increasement and proceeding of the polymerisation can cause the drop to stick to the surface, which will cause an irreversible deformation of the sphere. Sticking due to drastic viscosity increasement could be prevented by increasing rpm to higher values for a short or permanent time. In general, particles were formstable after 2-5 min. Particles were photographed.

For smaller size particles a Nano-Plotter was used (0.35-0.4 nl). 99 wt% triethylene glycol dimethacrylate and 1 wt% phenylbis(2,4,6-trimethylbenzoyl)phosphine oxide (Irgacure 819) were supersonicated 15 min and plotted on a superamphiphobic glas slide. The coated glas slide was held 3 min under the UV light in a distance of 1 cm to allow polymerisation of particles. The sample was analyzed using scanning electron microscopy.

### Results:

For drops of 2-2.5 mm diameter size the following monomer mixtures were tested:

| Mixture | Bis-GMA | TEGDMA | Poly(ethylene glycol)dimethacrylate | Water | Initiator |
|---|---|---|---|---|---|
| 1 | 15% | 84% | | | 1% |
| 2 | 15% | 84% | | | 1% |
| 3 | | | 74% | 25% | 1% |
| 4 | | | 99% | | 1% |

### Mixture 1:

A mixture containing 15% Bis GMA 84% TEGDMA, 1% phenylbis(2,4,6-trimethylbenzoyl)-phosphine oxide was pipetted on the superamphiphobic surface (diameter = 2.5 mm).

Substrate used: super amphiphobic mesh (w = 0.032, d = 0.028). The mesh was moved by hand in a rotational way to keep the drop moving. Pulsed light source for 20 sec, no light source for 40 s. Continuous light source for another 2 min.

### Mixture 2:

15% Bis GMA 84% TEGDMA, 1% phenylbis(2,4,6-trimethylbenzoyl)-phosphine oxide automatic (diameter of the deposited drop: 2 mm).

The deposited drop was moved by two-dimensional shaking on a 2 D shaking machine. 525 rpm over entire process, pulsed light source for 1 min. Viscosity increased after 25 s. After 1 min the light source was continuously on for further 4 min (entire time 5 min).

### Mixture 3:

25% Water 74% Poly(ethylene glycol)dimethacrylate Mₙ = 750, 1% Phenylbis(2,4,6-trimethylbenzoyl)phosphine oxide automatic (diameter = 2.5 mm).

This mixture was more viscous and therefore required higher rpm compared to mixture 2. With increasing viscosity the amplitude of the movement of the drop decreased and an increasing rpm was needed to keep the drop moving. In this case, 300 rpm were necessary over the entire process to keep the drop in movement. The light source was pulsed for 1 min and continuously on for further 2 min.

### Mixture 4:

99% Poly(ethylene glycol)dimethacrylate Mₙ = 750, 1% Phenylbis(2,4,6-trimethylbenzoyl)phosphine oxide automatic (diameter = 2.5 mm). The light source was pulsed for 1 min at 200 rpm. During this time, the viscosity increased and the rpm were adjusted to 300 rpm in order to provide movement of the drop. After ca. 20 s the drop moved easier and rpm were again decreased to 200. The light source was continuously on for another 1 min.

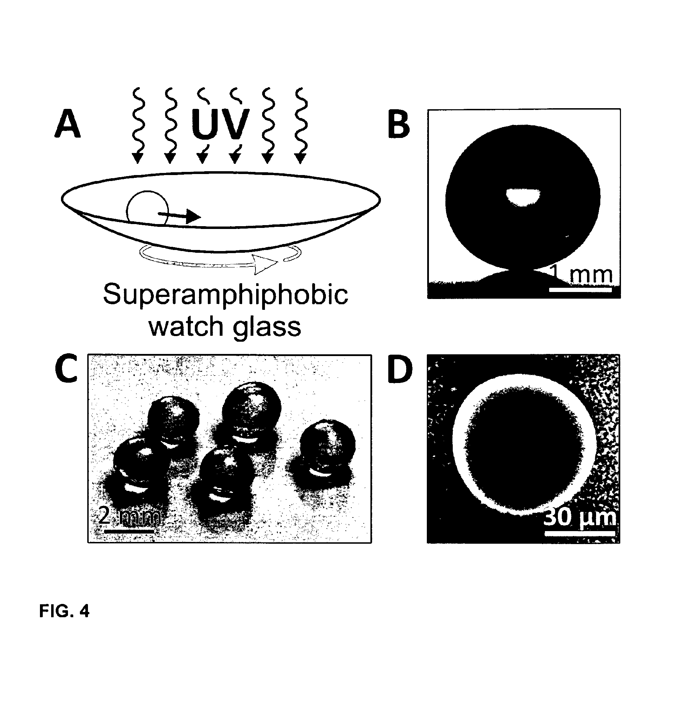

Fig. 4 (B,C) shows micrographs of particles synthesized from 15 wt% Bis-GMA, 84 wt% TEGDMA, 1 wt% phenylbis(2,4,6-trimethylbenzoyl)phosphine oxide (initiator). After mixing and sonication for 30 min, a drop of 8-10 µL was pipetted into a concave watch glass (10 cm diameter, 1.5 cm high) coated with a superamphiphobic layer. The polymerization was initiated by pulsed UV irradiation for 1 min followed by 4 min continuous illumination (LQ 400, UV-A: 200 mW/cm² at the end of the glass fibre). Particles were 2.5 mm in diameter. Fig. 4 (D) shows a SEM image of a smaller microsphere from 99 wt% TEGDMA with 1 wt% photoinitiator polymerized by 3 min UV exposure. The mix of monomer and photoinitiator were deposited onto the superamphiphobic layer by an inkjet (Nano-Tip J A 070-401) held at a distance of 4 cm.

### EXAMPLE 2

### Synthesis of biphasic janus-like polymer particles on a superamphiphobic surface

A polymer blend powder consisting of PS-dye (polystyrene with rhodamine B grafted onto the polystyrene chain) and poly(methyl methacrylate) (1:1, w/w) is first prepared by dissolving and mixing these two polymers in THF, followed by precipitating the polymer solution in methanol and drying the blend powder in an oven for 1 day.

The PS-dye/PMMA blend powder is placed on the superamphiphobic surface and heated (annealed) at an elevated temperature (150°C) above the glass transition temperatures (Tg) of both PS and PMMA for varying time periods. The fluorescent dye Rhodamine B is excitable by laser light of 570 nm wavelength and dye-linked PS was used to visualize the PS and PMMA phase by laser scanning confocal microscopy.

Fig. 5 illustrates the formation of polymer particles with 2 phases. Upper row: Sequence of video microscopy images showing an agglomerate of PS-dye and PMMA blends powder annealed at 170°C for 7 minutes. Lower row: fluorescent images of a mixed poly(methyl methacrylate)/polystyrene (PS) particle directly after mixing, annealing for 10 min and 10 h at 150°C. Shortly after heating (about 10 min), the polymer phases separate and form a janus particle. After 10 h, the PS has almost covered the PMMA phase and forms a shell around it.

### EXAMPLE 3

### Synthesis of nanoparticles-containing composite particles on a superamphiphobic surface

Magnetite nanoparticles having a particle size distribution around 10 nm diameter were prepared according to the method disclosed in Nature Materials 3, 891-895 (2004) and mixed with a polystyrene powder. Polystyrene was synthesized in house by anionic polymerization (*M_{w}* = 5.8 kg/mol, polydispersity 1.06, *T_{g}* = 78°C, surface tension γ = 34 mN/m at 120°C). The resulting mixture (e.g. with 12% magnetite nanoparticles) was applied onto a superamphiphobic surface and melted by heating at a temperature above the glass transition temperature of PS (78°C), e.g. 165°C for a time period of 2h in the presence of a magnetic field of 35 mT.

The molten agglomerates form spherical drops/particles (see Fig. 6) and the magnetic field induces orientation of the magnetic nanoparticles therein (Fig. 8).

Fig. 6 shows a sequence of video microscope images (after 0, 34, 43, 50 and 64 s of heating) of a polystyrene/magnetite composite powder annealed at 165°C for 2 h in a magnetic field of 35 mT on a superamphiphobic layer, the presence of the field is indicated by "B↑".

Fig. 7 shows video microscope images of a polystyrene/- magnetite microsphere in water rotating in an external magnetic field of 1.3 mT at 1.2 Hz. The orientation can be seen following the defect indicated by the arrow.

Fig. 8 shows the orientation of a composite microsphere fabricated in the presence (triangle) and absence (rhombus) of an external magnetic field. After cooling and solidification, the resulting composite particles have a permanent magnetic moment and rotate in an external magnetic field (Fig. 7).

### EXAMPLE 4

### Synthesis of optically anisotropic particles on a superamphiphobic surface

9CB liquid crystal particles were prepared as follows.

A small amount of 9CB (solid at room temperature) was scraped off from a solid block. The superamphiphobic layer was sprinkled with the powder. The substrate was heated to 65°C inducing melting of the powder and particles formation. Thereafter, the superamphiphobic surface was slowly cooled down to room temperature (1 K/min). After passing the isotropic-nematic phase transition the mesogenes aligned. After passing the nematic-smectic phase transition the particle solidified.

Fig. 10 shows micrographs of 9CB liquid crystal particles on a superamphiphobic surface produced by the above process (top view through a polarization microscope). Inset: Side view of a 9CB particle with 250 µm diameter at room temperature on a superamphiphobic surface.

## Claims

1. A process for particle synthesis on a superamphiphobic or superoleophobic surface comprising at least the followings steps:
a) providing a substrate having at least one superamphiphobic or superoleophobic surface, i.e. a surface exhibiting an apparent macroscopic contact angle of at least 140° with respect to 10 µl sized drops of liquids having a surface tension of not more than 0.06 N/m, in particular oils, alkanes, and aromatic compounds;
b) providing drops of a liquid material to be solidified on said superamphiphobic or superoleophobic surface;
c) maintaining the drops of a liquid material in contact with said at least one superamphiphobic or superoleophobic surface while the solidification of the liquid material to be solidified takes place and particles are formed, wherein the solidification of the liquid material is induced by at least one of the following: evaporation of at least one organic component of the liquid material, one or more phase transitions, cooling, exposure to radiation, e.g. visible light, UV or electron beam, or combining reactants to initiate a chemical reaction, in particular a polymerization reaction.

2. The process according to claim 1, wherein the drops of a liquid material to be solidified are provided on said superamphiphobic or superoleophobic surface by depositing drops of one or more liquids on said surface or by depositing at least one solid, e.g. a powder, film or fibrous material, on said surface and subsequently melting the same.

3. The process according to claim 2, wherein said drops of one or more liquids are deposited on said surface by ink jet printing using one or more nozzles, spraying, spray coating, spray painting, thermal spraying (including plasma spraying, detonation spraying, wire arc spraying, flame spraying, high velocity spraying, warm spraying, cold spraying), electrostatic coating, electrostatic spraying, electro-spinning, electro-jetting.

4. The process according to any one of claims 1 to 3, wherein the drops of a liquid material or the particles resulting from solidification are moved on said superamphiphobic or superoleophobic surface, e.g. by rolling on a tilted surface, by shaking or spinning, or by means of a gas flow.

5. The process according to any one of claims 1 to 4, wherein the particles are essentially spherical particles.

6. The process according to any one of claims 1 to 5, wherein the mean particle diameter along the shortest particle axis is in the range from 0,5 µm to 5 mm, preferably from 1 µm to 1 mm.

7. The process according to any one of claims 1 to 6, wherein the chemical reaction is a polymerization, induced by electromagnetic or electron beam irradiation, temperature, catalyst, or by mixing different reactants.

8. The process according to claim 7, wherein said drops of a liquid material are produced by merging at least two kinds of primary drops containing different reactants whereby the polymerization reaction is initiated.

9. The process according to claim 8, wherein said drops of a liquid material contain monomers selected from the group comprising vinyl compounds CH₂=CHR (R, R' = Cl, F, C₆H₅, OOCR', alkyl, phenyl, naphthyl, any aromatic unit which is substituted or nonsubstituted, alkoxy, oligo- and polyethyleneoxide), vinyliden compounds CH₂=CR₂ (R = Cl, F, CN), acrylic compounds CH₂=CHR (R = CN, COOH, COOR'), methacrylic compounds CH₂=C(CH₃)R (R = CN, COOH, COOR'), allyl compounds CH₂=CH-CH₂R (R = OH, OR', OOCR'), the corresponding divinyl, diacryl, and diallyl compounds, CH₂=CH-Z-CH=CH₂ and 1,3-dienes, CH₂=CR-CH=CH2 (R = H, CH₃, Cl), isocyanates, polyamines, polyols, polythiols, epoxides, oxiranes, ε-caprolactames, ε-caprolactones, or oligomers derived therefrom.

10. The process according to any one of claims 1 to 9,
wherein optically anisotropic particles are produced or the particles have one or more optically anisotropic compartments.

11. The process according to any one of claims 1 to 10,
wherein composite particles with 2 or more components are produced.

12. The process according to claim 11, wherein the composite particles are microparticles which comprise at least one polymeric matrix and nanoparticles incorporated in said polymeric matrix.

13. The process according to claim 11, wherein the composite particles are particles with 2 or more polymeric phases selected from the group comprising core-shell particles having a hydrophilic or less hydrophobic bulk phase and a hydrophobic surface phase or vice versa, and particles having compartments of different hydrophobicity or hydrophilicity on their surface.

14. The process according to claim 12, wherein the liquid drops are generated by melting a powder on a superamphiphobic or superoleophobic surface which powder comprises magnetic nanoparticles and the composite particles produced from said liquid drops also comprise said magnetic nanoparticles, have a permanent magnetic moment and are capable to be rotated in an external magnetic field.

15. A device for synthesizing particles, in particular polymeric particles, comprising
- a substrate having at least one superamphiphobic or superoleophobic surface as defined in claim 1
- means for depositing liquid drops or solid materials on said superamphiphobic or superoleophobic surface
- means for moving drops or particles on said superamphiphobic or superoleophobic surface and, optionally,
- means for heating, cooling and/or irradiating drops or particles on said superamphiphobic or superoleophobic surface.

16. The process or device according to any one of claims 1-15 wherein said at least one superamphiphobic or superoleophobic surface is a 2-dimensional extended, curved or essentially flat surface.

17. The process or device according to claim 16, wherein said at least one superamphiphobic or superoleophobic surface is provided on a carrier substrate which is porous and/or contains through-going openings, such as a micro- or mesoporous foam or a mesh.

18. Use of a substrate having at least one superamphiphobic or superoleophobic surface for synthesizing particles, in particular polymeric particles.
